# EUROPEAN PATENT APPLICATION

(11) **EP 4 645 473 A1**
(43) Date of publication of application: **05.11.2025**
(21) Application number: 23911740.1
(22) Date of filing: 14.12.2023
(51) Int. Cl.: H01M 4/62, H01M 4/13, H01M 4/133, H01M 4/139, H01M 4/1393

(54) **BINDER COMPOSITION FOR NONAQUEOUS SECONDARY BATTERY NEGATIVE ELECTRODE AND NONAQUEOUS SECONDARY BATTERY NEGATIVE ELECTRODE**

(30) Priority: 26.12.2022 JP 2022208471
(71) Applicant: Resonac Corporation, Tokyo 105-7325 (JP)
(72) Inventor: IKEHATA Ryohsuke, Tokyo 105-7325 (JP); KAWAHARA Yuta, Tokyo 105-7325 (JP); HORIKOSHI Hideo, Tokyo 105-7325 (JP)
(74) Representative: Strehl & Partner mbB
(86) International application number: PCT/JP2023/044783
(87) International publication number: WO 2024/142959

(57) **Abstract**

The binder composition for a non-aqueous secondary battery negative electrode contains a polymer and an aqueous medium, the polymer having a first structural unit derived from a monomer (a1), the monomer (a1) being a nonionic compound having only one ethylenically unsaturated bond, and satisfies the following condition (1): In a test solution obtained by diluting the binder composition with water and having a nonvolatile content of 0.4 mass%, the concentration of sodium ions detected using an inductively coupled plasma optical emission analyzer is 3.0 mg/L or less.

## Description

### TECHNICAL FIELD

The present invention relates to a binder composition for a non-aqueous secondary battery negative electrode, a slurry for a non-aqueous secondary battery negative electrode, a non-aqueous secondary battery negative electrode, and a non-aqueous secondary battery.

This application claims priority based on Japanese Patent Application No. 2022-208471, filed on December 26, 2022, the contents of which are incorporated herein by reference.

### BACKGROUND ART

Non-aqueous secondary batteries can be made small and lightweight, and are therefore widely used as power sources for notebook computers, mobile phones, power tools, electronic and communication devices, etc. In recent years, non-aqueous secondary batteries have also been used as power sources for electric vehicles and hybrid vehicles, etc. A representative example of a non-aqueous secondary battery is the lithium-ion secondary battery.

A non-aqueous secondary battery includes a positive electrode using a metal oxide or the like as an active material, a negative electrode using a carbon material such as graphite as an active material, and an electrolyte. The positive electrode and the negative electrode each include a current collector and an electrode active material layer formed on the current collector. The electrode active material layer usually includes a binder that bonds the active materials together and between the active materials and the current collector, thereby fixing the electrode active material layer on the current collector.

Conventionally, binders used in non-aqueous secondary batteries are known from Patent Documents 1 and 2.

Patent Document 1 describes a binder composition for secondary battery electrodes, which contains 100 parts by mass of an aqueous dispersion of at least one polymer selected from the group consisting of a styrene-butadiene copolymer latex and an acrylic emulsion, and 1 to 20 parts by mass of a nonionic surfactant.

Patent Document 2 describes a binder for lithium ion secondary battery electrodes having a glass transition temperature of 30°C or lower, which is obtained by emulsion polymerization of ethylenically unsaturated monomers containing, as essential components, 15 to 70% by mass of styrene relative to the total amount of ethylenically unsaturated monomers, an ethylenically unsaturated carboxylic acid ester, an ethylenically unsaturated carboxylic acid, and an internal crosslinking agent, in the presence of a surfactant.

### CITATION LIST

### PATENT DOCUMENTS

Patent Document 1: Japanese Patent Application Publication No. 2014-239070 (A)
Patent Document 2: Japanese Patent Application Publication No. 2011-243464 (A)

### SUMMARY OF INVENTION

### TECHNICAL PROBLEM

In recent years, there has been a demand for non-aqueous secondary batteries that are capable of high output and rapid charging, and therefore there is a demand for binders used in non-aqueous secondary batteries that can reduce the internal resistance of non-aqueous secondary batteries having electrodes using the binders.

The present invention has been made in consideration of the above circumstances, and has an object to provide a binder composition for a non-aqueous secondary battery negative electrode capable of forming a non-aqueous secondary battery negative electrode that results in a non-aqueous secondary battery with low internal resistance, and a slurry for a non-aqueous secondary battery negative electrode containing the same.

Another object of the present invention is to provide a nonaqueous secondary battery negative electrode that contains the nonvolatile content of the slurry for a nonaqueous secondary battery negative electrode of the present invention and that provides a nonaqueous secondary battery with low internal resistance, and a nonaqueous secondary battery including the same.

### SOLUTION TO PROBLEM

The present invention includes the following aspects.
[1] A binder composition for a non-aqueous secondary battery negative electrode, including: a polymer; and an aqueous medium, wherein
   the polymer has a first structural unit derived from a monomer (a1),
   the monomer (a1) is a nonionic compound having only one ethylenically unsaturated bond, and
   the binder composition satisfies the following condition (1): a concentration of sodium ions detected using an inductively coupled plasma optical emission analyzer is 3.0 mg/L or less in a test liquid obtained by diluting the binder composition with water and having a non-volatile concentration of 0.4 mass%.
[2] The binder composition for a non-aqueous secondary battery negative electrode according to [1] or [2], wherein the polymer further includes a second structural unit derived from a monomer (a2), and the monomer (a2) is a compound having a carboxy group and an ethylenically unsaturated bond.
[3] The binder composition for a non-aqueous secondary battery negative electrode according to [1], wherein the polymer further includes a third structural unit derived from a monomer (a3), and the monomer (a3) is a compound having a plurality of independent ethylenically unsaturated bonds.
[4] The binder composition for a non-aqueous secondary battery negative electrode according to any one of [1] to [3], wherein the polymer further includes a fourth structural unit derived from a monomer (a4), and the monomer (a4) contains a polymerizable surfactant.
[5] The binder composition for a non-aqueous secondary battery negative electrode according to any one of [1] to [4], wherein the binder composition satisfies the following condition (2): a concentration of sodium ions detected using an inductively coupled plasma optical emission spectrometer is 0.01 mg/L or more in a test liquid obtained by diluting the binder composition with water and having a non-volatile matter concentration of 0.4 mass%.
[6] The binder composition for a non-aqueous secondary battery negative electrode according to [2], wherein a content of the second structural unit in all structural units is 0.10% by mass or more and 20% by mass or less.
[7] The binder composition for a non-aqueous secondary battery negative electrode according to [3], wherein a content of the third structural unit in all structural units is 0.010% by mass or more and 15% by mass or less.
[8] The binder composition for a non-aqueous secondary battery negative electrode according to [4], wherein a content of the fourth structural unit in all structural units is 0.10% by mass or more and 6.0% by mass or less.
[9] The binder composition for a non-aqueous secondary battery negative electrode according to an one of [1] to [8], containing dispersed particles containing the polymer.
[10] The binder composition for a non-aqueous secondary battery negative electrode according to [9], wherein an average particle diameter d50 of the dispersed particles is 0.18 µm or more and 1.0 µm or less.
[11] A slurry for a non-aqueous secondary battery negative electrode containing the binder composition for a non-aqueous secondary battery negative electrode according to any one of [1] to [10] and a negative electrode active material.
[12] The slurry for a non-aqueous secondary battery negative electrode according to [11], wherein the negative electrode active material contains graphite.
[13] A non-aqueous secondary battery negative electrode containing the non-volatile content of the slurry for a non-aqueous secondary battery negative electrode according to [11] or [12].
[14] A non-aqueous secondary battery including the non-aqueous secondary battery negative electrode according to [13].

### ADVANTAGEOUS EFFECT OF INVENTION

According to the present invention, it is possible to provide a binder composition for a nonaqueous secondary battery negative electrode capable of forming a nonaqueous secondary battery negative electrode which results in a nonaqueous secondary battery having low internal resistance, and a slurry for a nonaqueous secondary battery negative electrode containing the same.

Furthermore, according to the present invention, it is possible to provide a non-aqueous secondary battery negative electrode that contains the non-volatile content of the slurry for a non-aqueous secondary battery negative electrode of the present invention and that provides a non-aqueous secondary battery with low internal resistance, and a non-aqueous secondary battery including the same.

### DESCRIPTION OF EMBODIMENTS

The present inventors have conducted intensive research as described below in order to solve the above problems and realize a binder composition for a nonaqueous secondary battery negative electrode (hereinafter may be abbreviated as "negative electrode") capable of forming a nonaqueous secondary battery negative electrode (hereinafter may be abbreviated as "negative electrode") that can provide a nonaqueous secondary battery with low internal resistance.

For example, the internal resistance of a lithium ion secondary battery, which is an example of a non-aqueous secondary battery, includes a charge transfer resistance associated with the insertion and desorption of lithium ions into and from an electrode active material contained in an electrode. Therefore, it is preferable that the negative electrode binder composition used in manufacturing a lithium ion secondary battery does not inhibit the insertion and desorption of lithium ions into and from the negative electrode active material.

For this reason, the present inventors have conducted extensive research focusing on the relationship between the negative electrode binder composition and the insertion and desorption of lithium ions into and from the negative electrode active material in the negative electrode of a lithium ion secondary battery.

As a result, it was found that when sodium ions are contained in the negative electrode binder composition, the solvated sodium ions are inserted into and removed from the negative electrode active material during charging and discharging of the lithium ion secondary battery, and the surface of the negative electrode active material deteriorates. When the surface of the negative electrode active material deteriorates, it becomes difficult for lithium ions to be inserted into and removed from the negative electrode active material, and the internal resistance of the lithium ion secondary battery increases.

More specifically, sodium ions are more likely to be solvated with the solvent contained in the electrolyte than lithium ions, and the size of the solvated ions is larger. When the solvated sodium ions are inserted into the negative electrode active material by charging and discharging the lithium ion secondary battery, the surface of the negative electrode active material is pushed out, causing the surface structure of the negative electrode active material to collapse and deteriorate.

In particular, when graphite is used as the negative electrode active material, when solvated sodium ions are inserted between the graphite layers by charging and discharging the lithium ion secondary battery, the graphite layers are pushed apart, and the structure of the graphite surface (edge surface) is easily deteriorated. When the structure of the graphite edge surface is deteriorated, lithium ions are difficult to insert, and the number of edge surfaces into which lithium ions can be inserted is reduced. For this reason, lithium ions present near the deteriorated edge surface move to the undeteriorated edge surface. As a result, it is estimated that the internal resistance of the lithium ion secondary battery increases.

Therefore, the present inventors have focused on the content of sodium ions contained in the negative electrode binder composition and have conducted extensive investigations as described below.

First, the present inventors have studied a method for detecting the concentration of sodium ions in a binder composition for a negative electrode. When the concentration of sodium ions in a binder composition for a negative electrode is detected using an inductively coupled plasma (ICP) optical emission spectrometer, if the binder composition for a negative electrode is measured without diluting it, the concentration is high enough to exceed the measurement limit, and therefore the accurate concentration may not be known. For this reason, the present inventors have diluted the binder composition for a negative electrode with water so that the concentration of sodium ions can be detected with high accuracy using an inductively coupled plasma optical emission spectrometer. Then, the effect of reducing the sodium ion concentration was studied using a test solution diluted with water so that the non-volatile content concentration of the binder composition for a negative electrode was 0.4 mass %.

As a result, it was found that it is sufficient to use a negative electrode binder composition in which the concentration of sodium ions detected by an inductively coupled plasma emission spectrometer is 3.0 mg/L or less in the test solution. Since the sodium ion concentration of the negative electrode binder composition is sufficiently low, the generation of sodium ions solvated with the solvent contained in the electrolyte is suppressed in a non-aqueous secondary battery having a negative electrode produced using the negative electrode binder composition. As a result, it is presumed that deterioration of the surface of the negative electrode active material due to insertion and desorption of solvated sodium ions in the negative electrode active material is suppressed, and a lithium ion secondary battery with low internal resistance is obtained.

**In** addition, conventional negative electrode binder compositions contain sodium ions derived from compounds used as raw materials and sodium ions derived from impurities in the compounds used as raw materials, and no binder compositions have been known in which the sodium ion concentration in the test solution is 3.0 mg/L or less. In particular, among conventional negative electrode binder compositions, those containing a polymer obtained by polymerizing a monomer containing a polymerizable surfactant contain a large amount of sodium ions. This is because if the amount of the polymerizable surfactant containing sodium in the polymerizable surfactant is reduced, the effect of including the polymerizable surfactant may not be fully obtained.

Furthermore, the present inventors produced a negative electrode using a negative electrode binder composition in which the sodium ion concentration in the test solution was 3.0 mg/L or less, and confirmed that the internal resistance of a nonaqueous secondary battery having this negative electrode could be reduced, thereby conceiving the present invention.

The binder composition for a non-aqueous secondary battery negative electrode, the slurry for a non-aqueous secondary battery negative electrode, the non-aqueous secondary battery negative electrode, and the non-aqueous secondary battery according to the present invention will be described in detail below. Note that the present invention is not limited to only the embodiments shown below.

Here, the following terms used in this specification will be explained.

"(Meth)acrylic" is a general term for acrylic and methacrylic. "(Meth)acrylate" is a general term for acrylate and methacrylate.

The term "ethylenically unsaturated bond" refers to an ethylenically unsaturated bond having radical polymerizability, unless otherwise specified.

**In** a polymer using a compound having an ethylenically unsaturated bond, a structural unit derived from the compound having an ethylenically unsaturated bond means a structural unit in which the chemical structure of the portion other than the ethylenically unsaturated bond in the compound having an ethylenically unsaturated bond is the same as the chemical structure of the portion in the polymer other than the portion corresponding to the ethylenically unsaturated bond of the structural unit. The ethylenically unsaturated bond of the compound is changed to a single bond when forming a polymer. For example, in a polymer of methyl methacrylate, the structural unit derived from methyl methacrylate is represented by -CH₂-C(CH₃)(COOCH₃)-.
a polymer of a compound having an ionic functional group and an ethylenically unsaturated bond , for example, a structural unit having an ionic functional group such as a carboxyl group, such as the second structural unit described later, is considered to be a structural unit derived from the same ionic compound, regardless of whether a part of the functional group has been ion-exchanged or not. For example, a structural unit represented by -CH₂-C(CH₃)(COONa)- may also be considered to be a structural unit derived from methacrylic acid.

In addition, for a compound having multiple independent ethylenically unsaturated bonds, one or more ethylenically unsaturated bonds may remain in the structural unit of the polymer of the compound. For example, in the case of a polymer of divinylbenzene, the structural unit derived from divinylbenzene may be a structure without an ethylenically unsaturated bond (the parts corresponding to the two ethylenically unsaturated bonds of divinylbenzene are both incorporated into the polymer chain), or may be a structure with one ethylenically unsaturated bond (the part corresponding to only one of the ethylenically unsaturated bonds is incorporated into the polymer chain).Here, the multiple independent ethylenically unsaturated bonds refer to multiple ethylenically unsaturated bonds that do not form conjugated dienes with each other.

Furthermore, after polymerization, when a portion other than the chain structure corresponding to the ethylenically unsaturated bond in the polymer, for example, a functional group such as a carboxyl group, no longer corresponds to the chemical structure of the monomer due to a chemical reaction, the structural unit of the polymer is made to be a structural unit derived from a compound having an ethylenically unsaturated bond in the polymer. For example, when vinyl acetate is polymerized and then saponified, the structural unit of the polymer is made to be a structural unit derived from vinyl alcohol, not a structural unit derived from vinyl acetate, based on the chemical structure of the polymer.

In this embodiment, the term "class" attached to the name of a compound means a group of compounds that include the compound structure, and includes the compound having a substituent.

### <1. Binder composition for non-aqueous secondary battery negative electrode>

The binder composition for a negative electrode of the present embodiment contains a polymer (P) and an aqueous medium (B). The binder composition for a negative electrode of the present embodiment preferably contains dispersed particles containing the polymer (P).

The negative electrode binder composition of the present embodiment satisfies the following condition (1).

Condition (1): In a test liquid obtained by diluting the binder composition with water and having a non-volatile content of 0.4 mass %, the concentration of sodium ions detected using an inductively coupled plasma optical emission analyzer is 3.0 mg/L or less.

In this embodiment, the sodium ion concentration of the test liquid obtained by diluting the binder composition with water and having a non-volatile content of 0.4 mass % is calculated based on the results of measuring the test liquid at a temperature of 23°C. using an inductively coupled plasma optical emission spectrometer.

### [Polymer (P)]

The polymer (P) contained in the negative electrode binder composition of this embodiment has at least a first structural unit derived from the monomer (a1) shown below.

The polymer (P) of the present embodiment may contain, in addition to the first structural unit, a second structural unit derived from a monomer (a2), a third structural unit derived from a monomer (a3), and a fourth structural unit derived from another monomer (a4) not corresponding to any of the monomers (a1) to (a3).

### [First structural unit]

The first structural unit of the polymer (P) is derived from the monomer (a1). The monomer (a1) is a nonionic compound having only one ethylenically unsaturated bond. That is, the monomer (a1) is a compound having neither an anionic functional group nor a cationic functional group. The monomer (a1) may be only one type of compound, or may be a combination of two or more types of compounds.

As the monomer (a1), it is preferable to use at least one of a (meth)acrylic acid ester and an aromatic compound having an ethylenically unsaturated bond, and it is more preferable to use a combination of both compounds. The (meth)acrylic acid ester is more preferably a (meth)acrylic acid alkyl ester. The number of carbon atoms in the alkyl group in the (meth)acrylic acid alkyl ester is preferably 1 to 20. As the monomer (a1), a monomer (a1) other than a (meth)acrylic acid alkyl ester and an aromatic compound having an ethylenically unsaturated bond may be used in combination.

Examples of the (meth)acrylic acid alkyl ester contained in the (meth)acrylic acid ester used in the monomer (a1) include methyl (meth)acrylate, ethyl (meth)acrylate, n-propyl (meth)acrylate, isopropyl (meth)acrylate, n-butyl (meth)acrylate, tert-butyl (meth)acrylate, cyclohexyl (meth)acrylate, 2-ethylhexyl (meth)acrylate, isobornyl (meth)acrylate, lauryl (meth)acrylate, stearyl (meth)acrylate, etc. Among these, it is preferable to contain 2-ethylhexyl acrylate, since this results in a polymer (P) capable of forming an electrode active material layer having excellent electrolyte resistance.

Examples of aromatic compounds having an ethylenically unsaturated bond used in the monomer (a1) include styrene, t-butylstyrene, α-methylstyrene, p-methylstyrene, 1,1-diphenylethylene, etc. When the monomer (a1) contains an aromatic vinyl compound, it is more preferable that the monomer (a1) contains at least one of styrene and α-methylstyrene, and it is even more preferable that the monomer (a1) contains styrene, since this results in a polymer (P) having excellent dispersibility in an aqueous medium.

Examples of the monomer (a1) other than the (meth)acrylic acid alkyl ester and the aromatic compound having an ethylenically unsaturated bond include a compound having an ethylenically unsaturated bond and a polar functional group, an aliphatic hydrocarbon compound having an ethylenically unsaturated bond, and an alicyclic hydrocarbon compound having an ethylenically unsaturated bond.

The polar functional group in the compound having an ethylenically unsaturated bond and a polar functional group used for the monomer (a1) preferably contains at least one of a hydroxy group and a cyano group , and more preferably contains a hydroxy group.

Examples of the compound having an ethylenically unsaturated bond and a polar functional group, which is used for the monomer (a1), include 2-hydroxyethyl (meth)acrylate, 2-hydroxypropyl (meth)acrylate, and (meth)acrylonitrile. It is preferable to contain 2-hydroxyethyl methacrylate, since good polymerization stability can be obtained when producing the polymer (P).

### [Second structural unit]

The polymer (P) may have a second structural unit as an arbitrary structural unit. The second structural unit is derived from the monomer (a2). The monomer (a2) is a compound having an ethylenically unsaturated bond and a carboxy group. The monomer (a2) preferably has only one ethylenically unsaturated bond. The monomer (a2) may be only one type of compound, or may be a combination of two or more types of compounds. As the monomer (a2), a compound having multiple carboxy groups in one molecule may be used. That is, the polymer (P) may contain multiple carboxy groups in one structural unit.

Examples of the monomer (a2) having only one ethylenically unsaturated bond include unsaturated monocarboxylic acids such as methacrylic acid, acrylic acid, and crotonic acid; unsaturated dicarboxylic acids such as itaconic acid and fumaric acid. Examples of the monomer (a2) having two or more ethylenically unsaturated bonds include sorbic acid, muconic acid, and linoleic acid. Among these, it is preferable to use at least one of acrylic acid, methacrylic acid, and itaconic acid as the monomer (a2), since this becomes a polymer (P) capable of forming an electrode in which the electrode active material layer is not easily peeled off from the current collector.

In this embodiment, a compound having a structure that can correspond to both the monomer (a2) and the monomer (a3) described later is classified as the monomer (a2).

At least a part of the structural unit derived from the monomer (a2) may form a salt with a basic substance. Examples of the monomer (a2) forming a salt with a basic substance include metal salts and ammonium salts of the monomer (a2). Examples of the metal salt include alkali metals such as lithium, sodium, and potassium. The monomer (a2) forming a salt with a basic substance is preferably free of sodium salt and is preferably an ammonium salt, from the viewpoint of not increasing the sodium ion concentration in the negative electrode binder composition.

Specific examples of the monomer (a2) forming a salt with a basic substance include lithium (meth)acrylate, lithium itaconate, dilithium itaconate, sodium (meth)acrylate, sodium itaconate, disodium itaconate, ammonium (meth)acrylate, ammonium itaconate, and diammonium itaconate.

### [Third structural unit]

The polymer (P) may have a third structural unit as an optional structural unit. The third structural unit is derived from the monomer (a3). The monomer (a3) is a compound having a plurality of independent ethylenically unsaturated bonds. "Independent" means that it is not a conjugated double bond such as that in 1,3-butadiene. Therefore, the monomer (a3) is a compound capable of forming a crosslinked structure in radical polymerization with the monomer (a1) and the monomer (a2). The monomer (a3) does not fall under either the monomer (a1) or the monomer (a2). As the monomer (a3), only one type of compound may be used, or two or more different types of compounds may be used.

Examples of the monomer (a3) include compounds having two ethylenically unsaturated bonds such as divinylbenzene, ethylene glycol di(meth)acrylate, 1,6-hexanediol di(meth)acrylate, and 2-hydroxy-3-acryloyloxypropyl methacrylate, and compounds having three or more ethylenically unsaturated bonds such as trimethylolpropane tri(meth)acrylate. As the monomer (a3), it is preferable to use at least one of divinylbenzene and trimethylolpropane triacrylate, since good polymerization stability can be obtained when producing the polymer (P).

### [Fourth structural unit]

The polymer (P) may have a fourth structural unit as an optional structural unit. The fourth structural unit is derived from another monomer (a4).

The other monomer (a4) is a monomer that does not fall under any of the monomers (a1), (a2), and (a3). Examples of the other monomer (a4) include, but are not limited to, a compound having only one ethylenically unsaturated bond and an anionic functional group other than a carboxyl group, such as a sulfo group or a phosphate group, a surfactant having an ethylenically unsaturated bond (hereinafter, sometimes referred to as a "polymerizable surfactant"), a compound having an ethylenically unsaturated bond and functioning as a silane coupling agent, and the like. Among these, it is preferable to include a polymerizable surfactant as the other monomer (a4) because good polymerization stability can be obtained when producing the polymer (P).

Examples of the compound having only one ethylenically unsaturated bond and a sulfo group include aromatic vinyl compounds having a sulfo group and aromatic vinyl compounds having a sulfo group forming a salt. Among these, it is preferable to use at least one of parastyrene sulfonic acid and parastyrene sulfonate, and it is more preferable to use parastyrene sulfonate. As the parastyrene sulfonate, it is preferable not to contain a sodium salt from the viewpoint of not increasing the sodium ion concentration in the negative electrode binder composition, and ammonium parastyrene sulfonate or lithium parastyrene sulfonate is particularly preferable. When sodium parastyrene sulfonate is used as the parastyrene sulfonate, it is used in a range in which the sodium ion concentration in the negative electrode binder composition containing the polymer (P) satisfies the above condition (1).

As the polymerizable surfactant, which is an example of the other monomer (a4), a compound having an ethylenically unsaturated bond and functioning as a surfactant can be used.

Examples of the polymerizable surfactant include compounds represented by the following chemical formulas (1) to (4).

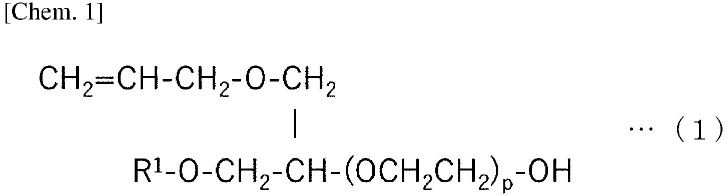

In formula (1), R ¹ is an alkyl group. p is an integer of 1 to 100. R ¹ is preferably an alkyl group having 10 to 40 carbon atoms, and more preferably a straight-chain unsubstituted alkyl group having 10 to 40 carbon atoms. From the viewpoint of not increasing the sodium ion concentration in the negative electrode binder composition, it is preferable to use an alkyl ether-based nonionic surfactant represented by formula (1) as the polymerizable surfactant. Examples of the compound represented by formula (1) include α- [2-(allyloxy)-(alkyloxymethyl)ethyl] -ω-hydroxypolyoxyethylene (trade name: ADEKA REASOAP ER20, manufactured by ADEKA Corporation).

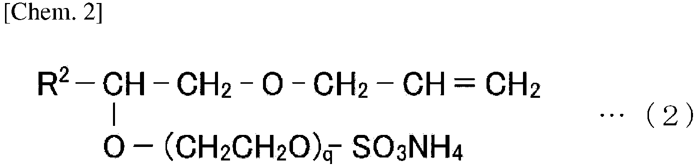

In formula (2), R² is an alkyl group. q is an integer of 10 to 12. R² is preferably an alkyl group having 10 to 40 carbon atoms, and more preferably a linear unsubstituted alkyl group having 10 to 40 carbon atoms. The compound represented by formula (2) is preferably free of sodium from the viewpoint of not increasing the sodium ion concentration in the negative electrode binder composition. Examples of the compound represented by formula (2) include polyoxyethylene alkyl ether sulfate ammonium salt (trade name: Aqualon KH-10, manufactured by Daiichi Kogyo Seiyaku Co., Ltd.), α- [2-(allyloxy)-1-(alkyloxymethyl)ethyl] -ω-polyoxyethylene sulfate ammonium salt (trade name: ADEKA REASOAP SR10, manufactured by ADEKA Corporation), and the like.

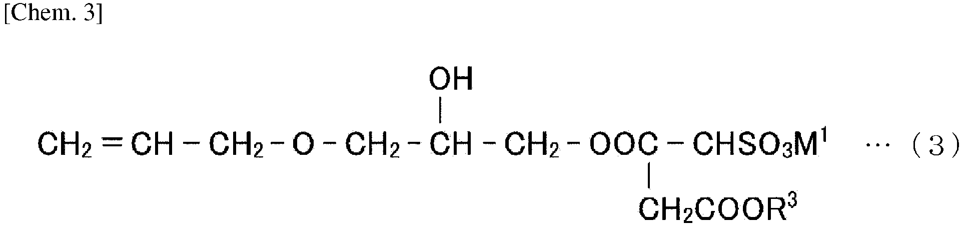

In formula (3), R³ is an alkyl group. M¹ is NH ₄ or Na. R³ is preferably an alkyl group having 10 to 40 carbon atoms, and more preferably a linear unsubstituted alkyl group having 10 to 40 carbon atoms. In the compound represented by formula (3), M¹ is preferably NH₄ from the viewpoint of not increasing the sodium ion concentration in the negative electrode binder composition. When M¹ is Na, it is used in a range in which the sodium ion concentration in the negative electrode binder composition containing the polymer (P) satisfies the above condition (1).

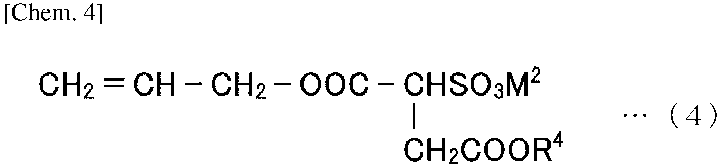

In formula (4), R⁴ is an alkyl group. M² is NH₄ or Na. R⁴ is preferably an alkyl group having 10 to 40 carbon atoms, and more preferably a straight-chain unsubstituted alkyl group having 10 to 40 carbon atoms. In the compound represented by formula (4), M² is preferably NH₄ from the viewpoint of not increasing the sodium ion concentration in the negative electrode binder composition. When M² is Na, it is used in a range in which the sodium ion concentration in the negative electrode binder composition containing the polymer (P) satisfies the above condition (1). Examples of the compound represented by formula (4) include sodium alkylaryl sulfosuccinate (trade name: ELEMINOL JS-20, manufactured by Sanyo Chemical Industries, Ltd.).

Examples of the other monomer (a4) that has an ethylenically unsaturated bond and functions as a silane coupling agent include vinyltrimethoxysilane, γ-methacryloxypropyltrimethoxysilane, vinyltriethoxysilane, and γ-methacryloxypropyltriethoxysilane.

[Content of each structural unit in polymer (P)] In this embodiment, the content of each structural unit in the polymer (P) is considered to be the same as the content of each monomer in the total amount of the monomer components used in the production of the polymer (P).

### (Content of first structural unit in all structural units)

The content of the first structural unit in all structural units (in other words, the content of monomer (a1) in the total amount of monomer components used in the production of polymer (P)) is preferably 60 mass% or more, more preferably 70 mass% or more, even more preferably 75 mass% or more, and particularly preferably 80 mass% or more. This is because better polymerization stability can be obtained when producing polymer (P). The content of the first structural unit in all structural units is preferably 97 mass% or less, more preferably 95 mass% or less, and even more preferably 93 mass% or less. This is because the polymer (P) can form an electrode in which the electrode active material layer is even less likely to peel off from the current collector.

Regarding the composition of the monomer (a1), it is preferable to appropriately adjust the type and amount of the compound in order to adjust the glass transition point of the polymer (P) or to adjust the polymerization rate according to the molecular design.

Specifically, when the monomer (a1) contains an aromatic compound having an ethylenically unsaturated bond, the content of the structural unit derived from the aromatic compound having an ethylenically unsaturated bond in all structural units is preferably 36% by mass or more, more preferably 41% by mass or more, and even more preferably 43% by mass or more, because when a negative electrode slurry containing the polymer (P) is produced, the polymer (P) has excellent dispersibility.

### (Content of second structural unit in all structural units)

When the polymer (P) contains the second structural unit, the content of the second structural unit in all structural units (in other words, the content of the monomer (a2) in the total amount of the monomer components used in the production of the polymer (P)) is preferably 0.10 mass% or more, more preferably 1.0 mass% or more, even more preferably 3.0 mass% or more, and particularly preferably 4.0 mass% or more. This is because an electrode in which the electrode active material layer is even less likely to peel off from the current collector can be formed. The content of the second structural unit in all structural units is preferably 20 mass% or less, more preferably 15 mass% or less, and even more preferably 10 mass% or less. This is because better polymerization stability can be obtained when producing the polymer (P).

### (Content of third structural units in all structural units)

When the polymer (P) contains a third structural unit, the content of the third structural unit in all structural units (in other words, the content of the monomer (a3) in the total amount of the monomer components used in the production of the polymer (P)) is preferably 0.010% by mass or more, more preferably 0.020% by mass or more, and more preferably 0.030% by mass or more. This is because the effect of the monomer (a3) as an internal crosslinking agent is significantly obtained, deterioration of the polymer (P) is suppressed, and a negative electrode binder composition that can obtain a non- aqueous secondary battery with lower internal resistance is obtained. The content of the third structural unit in all structural units is preferably 15% by mass or less, more preferably 5.0% by mass or less, even more preferably 3.0% by mass or less, and particularly preferably 2.0% by mass or less. This is because gelation of the negative electrode binder composition can be suppressed.

### (Content of Fourth Structural Unit in All Structural Units)

When the polymer (P) contains a fourth structural unit derived from another monomer (a4), and the other monomer (a4) is a compound having only one ethylenically unsaturated bond and having a sulfo group, the content of the fourth structural unit in all structural units (in other words, the content of the monomer (a4) in the total amount of the monomer components used in the production of the polymer (P)) is preferably 0.10 mass% or more, more preferably 0.20 mass% or more, and even more preferably 0.30 mass% or more. This is because good polymerization stability can be obtained when producing the polymer (P). In this case, the content of the fourth structural unit in all structural units is preferably 6.0 mass% or less, more preferably 5.0 mass% or less, and even more preferably 4.0 mass% or less. This is because the particle size, viscosity, etc. of the polymer (P) can be appropriately adjusted.

When the polymer (P) contains a fourth structural unit derived from another monomer (a4), and the other monomer (a4) is a polymerizable surfactant, the content of the fourth structural unit in all structural units (in other words, the content of the monomer (a4) in the total amount of the monomer components used in the production of the polymer (P)) is preferably 0.10% by mass or more, more preferably 0.20% by mass or more, and even more preferably 0.30% by mass or more. This is because the effect of including the polymerizable surfactant becomes significant, and good polymerization stability can be obtained when producing the polymer (P). In this case, the content of the fourth structural unit in all structural units is preferably 6.0% by mass or less, more preferably 5.0% by mass or less, and even more preferably 4.0% by mass or less. This is because the particle size, viscosity, etc. of the polymer (P) can be appropriately adjusted.

### [Method for producing polymer (P)]

The polymer (P) in this embodiment can be produced by using a known polymerization method, for example, by copolymerizing monomers including the monomer (a1) and, as necessary, the monomer (a2), the monomer (a3), and other monomers (a4) (polymerization step). Hereinafter, the monomers ( components (a1) to (a4)) used to synthesize the polymer (P) may be collectively referred to as the monomer (a).

As a method for copolymerizing the monomer (a), for example, an emulsion polymerization method in which the monomer (a) is emulsion-polymerized in an aqueous medium (b) can be mentioned. When the polymer (P) is produced by the emulsion polymerization method, in addition to the monomer (a) and the aqueous medium (b), components such as a non-polymerizable surfactant (c), a basic substance (d), a radical polymerization initiator (e), and a chain transfer agent (f) can be used.

### [Aqueous medium (b)]

The aqueous medium (b) is one selected from the group consisting of water, a hydrophilic solvent, and a mixture containing water and a hydrophilic solvent. Examples of the hydrophilic solvent include methanol, ethanol, isopropyl alcohol, and N-methylpyrrolidone. From the viewpoint of polymerization stability, the aqueous medium (b) is preferably water. As the aqueous medium (b), a mixture in which a hydrophilic solvent is added to water may be used as long as the polymerization stability is not impaired. From the viewpoint of not increasing the sodium ion concentration in the negative electrode binder composition, the aqueous medium (b) is preferably ion-exchanged water.

### [Non-polymerizable surfactant (c)]

When the polymer (P) is produced by emulsion polymerization, a solution containing an aqueous medium (b) and a monomer (a) may contain a non-polymerizable surfactant (c) for emulsion polymerization. The non-polymerizable surfactant (c) is a surfactant (c) that does not have a polymerizable unsaturated bond in its chemical structure. The surfactant (c) improves the dispersion stability of the solution during emulsion polymerization and/or the dispersion (emulsion) obtained after polymerization. In particular, when the other monomer (a4) does not contain a polymerizable surfactant containing sodium, good polymerization stability is obtained when producing the polymer (P), so it is preferable to contain a non-polymerizable surfactant (c).

As the surfactant (c), it is preferable to use an anionic surfactant and/or a nonionic surfactant, and it is preferable to use a nonionic surfactant from the viewpoint of not increasing the sodium ion concentration in the negative electrode binder composition .

Examples of the anionic surfactant include alkylbenzenesulfonates, alkyl sulfates, polyoxyethylene alkyl ether sulfates, and fatty acid salts.

Examples of the nonionic surfactant include polyoxyethylene alkyl ether, polyoxyethylene alkyl phenyl ether, polyoxyethylene polycyclic phenyl ether, polyoxyalkylene alkyl ether, sorbitan fatty acid ester, and polyoxyethylene sorbitan fatty acid ester. Among these nonionic surfactants, it is preferable to use polyoxyethylene alkyl ether because it can obtain good polymerization stability when producing the polymer (P).

The above surfactants (c) may be used alone or in combination of two or more.

### [Basic substance (d)]

When the polymer (P) is produced by emulsion polymerization, a basic substance (d) may be added to the solution to be emulsion-polymerized containing the aqueous medium (b) and the monomer (a) and/or the dispersion after emulsion polymerization. By adding the basic substance (d), the acidic components contained in the monomer (a) are neutralized. As a result, the pH of the solution during emulsion polymerization and/or the dispersion after emulsion polymerization is in an appropriate range, and the stability of the solution during emulsion polymerization and/or the dispersion after emulsion polymerization is improved.

Examples of the basic substance (d) to be added to the solution to be emulsion-polymerized and/or the dispersion liquid after emulsion polymerization include ammonia, triethylamine, sodium hydroxide, lithium hydroxide, and the like. As the basic substance (d), it is preferable to use a compound that does not contain sodium from the viewpoint of not increasing the sodium ion concentration in the negative electrode binder composition. Specifically, it is preferable to use ammonia as the basic substance (d). These basic substances (d) may be used alone or in combination of two or more.

### [Radical Polymerization Initiator (e)]

The radical polymerization initiator (e) used in producing the polymer (P) by the emulsion polymerization method is not particularly limited, and known initiators can be used. Examples of the radical polymerization initiator (e) include persulfates such as ammonium persulfate and potassium persulfate; hydrogen peroxide; azo compounds; and organic peroxides such as tert-butyl hydroperoxide, tert-butyl peroxybenzoate, and cumene hydroperoxide. Among these radical polymerization initiators (e), it is preferable to use a compound that does not contain sodium from the viewpoint of not increasing the sodium ion concentration in the negative electrode binder composition. Specifically, it is preferable to use one or more types selected from tert-butyl peroxybenzoate, tert-butyl hydroperoxide, and hydrogen peroxide as the radical polymerization initiator (e).

In the present embodiment, when the polymer (P) is produced by the emulsion polymerization method, redox polymerization may be performed by using a reducing agent such as sodium bisulfite, Rongalite, ascorbic acid, etc. together with the radical polymerization initiator (e). As the reducing agent, it is preferable to use a compound that does not contain sodium, from the viewpoint of not increasing the sodium ion concentration in the binder composition for a negative electrode.

The amount of radical polymerization initiator (e) added (including the reducing agent when used in combination) is preferably 0.001 parts by mass or more, more preferably 0.01 parts by mass or more, relative to 100 parts by mass of monomer (a). This is because the conversion rate of monomer (a) to polymer (P) can be increased when polymer (P) is produced by emulsion polymerization. The amount of radical polymerization initiator (e) added is preferably 10 parts by mass or less, more preferably 5 parts by mass or less, relative to 100 parts by mass of monomer (a). This is because the molecular weight of polymer (P) can be increased, and the swelling rate of the negative electrode containing the polymer (P) of this embodiment with respect to the electrolyte can be reduced.

### [Chain transfer agent (f)]

The chain transfer agent (f) used in producing the polymer (P) by emulsion polymerization is used to adjust the molecular weight of the polymer (P) obtained by emulsion polymerization. Examples of the chain transfer agent (f) include n-dodecyl mercaptan, tert-dodecyl mercaptan, n-butyl mercaptan, 2-ethylhexyl thioglycolate, 2-mercaptoethanol, β-mercaptopropionic acid, methyl alcohol, n-propyl alcohol, isopropyl alcohol, t-butyl alcohol, and benzyl alcohol.

### [Emulsion polymerization method]

Examples of the emulsion polymerization method used in producing the polymer (P) include a method of emulsion polymerization while continuously feeding each component used in the emulsion polymerization into a reaction vessel. The temperature of the emulsion polymerization is not particularly limited, but is, for example, 30 to 90°C, preferably 50 to 85°C, and more preferably 55 to 80°C. It is preferable to carry out the emulsion polymerization with stirring. It is also preferable to continuously feed the monomer (a) and the radical polymerization initiator (e) to the solution during the emulsion polymerization so that the concentrations of the monomer (a) and the radical polymerization initiator (e) in the solution during the emulsion polymerization are uniform.

### [Method of adjusting sodium ion concentration in polymer (P)]

The sodium ion concentration in the polymer (P) can be adjusted by a known method.

For example, it can be adjusted by appropriately selecting the types and amounts of materials used in producing the polymer (P). Specifically, a method can be used in which the types and amounts of the monomer (a), the aqueous medium (b), the non-polymerizable surfactant (c), the basic substance (d), and the radical polymerization initiator (e) are appropriately selected.

**In** addition, sodium contained in the polymer (P) may be removed using an ion exchange resin. As the ion exchange resin, a known substance can be used, such as polydimethyldiallylammonium salt, polystyrenesulfonate, etc.

### [Aqueous medium (B)]

The aqueous medium (B) contained in the negative electrode binder composition of this embodiment is water, a hydrophilic solvent, or a mixture thereof. Examples of the hydrophilic solvent include the same hydrophilic solvents as those exemplified as the aqueous medium (b) used in the synthesis of the polymer (P). The aqueous medium (B) may be the same as or different from the aqueous medium (b) used in the synthesis of the polymer (P). The aqueous medium (B) is preferably ion-exchanged water from the viewpoint of not increasing the sodium ion concentration in the negative electrode binder composition.

When the negative electrode binder composition is an emulsion obtained by producing a polymer (P) by emulsion polymerization, the aqueous medium (B) may be the aqueous medium (b) used in the synthesis of the polymer (P). The aqueous medium (B) may be the aqueous medium (b) used in the synthesis of the polymer (P) to which a new aqueous medium has been added. The aqueous medium (B) may be a new aqueous solvent that replaces part or all of the aqueous medium (b) contained in the dispersion obtained by producing the polymer (P) by emulsion polymerization. The new aqueous medium used in this case may have the same composition as the aqueous medium (b) used in the synthesis of the polymer (P), or may have a different composition.

The negative electrode binder composition of the present embodiment is preferably one in which dispersed particles containing the polymer (P) are dispersed in an emulsion state in the aqueous medium (B). Examples of the dispersed particles include emulsion particles containing the polymer (P) and a non-polymerizable surfactant (c), and particles containing the polymer (P) having a structural unit derived from a polymerizable surfactant.

The negative electrode binder composition of this embodiment may be a dispersion obtained by producing a polymer (P) by an emulsion polymerization method. That is, the negative electrode binder composition may be an emulsion containing a polymer (P) and an aqueous medium (B). In addition, the negative electrode binder composition of this embodiment may be a dispersion obtained by dispersing particles of a polymer (P) obtained by a method other than the emulsion polymerization method in an aqueous medium (B). In this case, a known method can be used as a method for dispersing the polymer (P) in the aqueous medium (B).

The negative electrode binder composition of the present embodiment may contain other components in addition to the polymer (P) and the aqueous medium (B). Specifically, the negative electrode binder composition may contain, for example, a polymer other than the polymer (P) and/or the above-mentioned components used in the synthesis of the polymer (P).

[Sodium ion concentration in negative electrode binder composition] The negative electrode binder composition of the present embodiment satisfies the following condition (1).

Condition (1): In a test liquid obtained by diluting the binder composition with water and having a non-volatile content of 0.4% by mass, the sodium ion concentration detected by an inductively coupled plasma optical emission analyzer is 3.0 mg/L or less.

In the negative electrode binder composition of this embodiment, the concentration of sodium ions in the test solution is 3.0 mg/L or less, so that in a non-aqueous secondary non-aqueous secondary battery having a negative electrode prepared using the composition, the deterioration of the surface of the negative electrode active material due to the insertion and desorption of solvated sodium ions into and from the negative electrode active material can be suppressed. As a result, a lithium ion secondary battery with low internal resistance is obtained. The concentration of sodium ions in the test solution of the negative electrode binder composition is preferably 2.0 mg/L or less, more preferably 1.0 mg/L or less, even more preferably 0.5 mg/L or less, and particularly preferably 0.1 mg/L or less. This is because the deterioration of the surface of the negative electrode active material can be more effectively suppressed in a non-aqueous secondary non-aqueous secondary battery having a negative electrode prepared using the negative electrode binder composition.

The negative electrode binder composition of the present embodiment preferably satisfies the following condition (2).

Condition (2): In a test liquid obtained by diluting the binder composition with water and having a non-volatile content of 0.4 mass %, the concentration of sodium ions detected by an inductively coupled plasma optical emission analyzer is 0.01 mg/L or more.

The concentration of sodium ions in the test solution for the negative electrode binder composition is preferably 0.015 mg/L or more, more preferably 0.02 mg/L or more, even more preferably 0.025 mg/L or more, and particularly preferably 0.03 mg/L or more, because this allows for a greater number of options for the types and amounts of compounds used when producing the negative electrode binder composition.

The sodium ion concentration of the negative electrode binder composition in this specification can be measured by the method shown in the Examples.

### [Method of adjusting sodium ion concentration in negative electrode binder composition]

The sodium ion concentration in the negative electrode binder composition of the present embodiment can be adjusted by a known method.

For example, the sodium ion concentration can be adjusted by using an aqueous medium (B) and a polymer (P) contained in the negative electrode binder composition that have an appropriate sodium ion concentration.

**In** addition, sodium ions in the negative electrode binder composition may be removed using an ion exchange resin. As the ion exchange resin, the same ion exchange resins as those that can be used to remove sodium ions in the polymer (P) can be used.

### [Average particle diameter d50 of dispersed particles containing polymer (P)]

The average particle diameter d50 of the dispersed particles containing the polymer (P) in the negative electrode binder composition of this embodiment is preferably 0.18 µm or more, and more preferably 0.20 µm or more. When the average particle diameter d50 is 0.18 µm or more, an electrode can be formed in which the electrode active material layer is even less likely to peel off from the current collector.

In this embodiment, the average particle diameter d50 of the dispersed particles containing the polymer (P) is a value measured by the method described in the Examples section below.

The average particle diameter d50 of the dispersed particles containing the polymer (P) is preferably 1.0 µm or less, more preferably 0.80 µm or less, even more preferably 0.60 µm or less, and particularly preferably 0.50 µm or less. When the average particle diameter d50 of the polymer (P) is 1.0 µm or less, when an electrode sheet having an electrode active material layer formed on a current collector is pressed to produce an electrode containing the polymer (P), the electrode sheet can be pressed under suitable pressing conditions. As a result, the electrode active material can be more firmly bound to the current collector.

The average particle size d50 of the dispersed particles containing the polymer (P) can be adjusted by a known method, for example, by appropriately selecting the type and amount of the monomer (a) and/or the non-polymerizable surfactant (c) used when producing the polymer (P) by emulsion polymerization.

### [Non-volatile content of binder composition for negative electrode]

The non-volatile content of the negative electrode binder composition of this embodiment is preferably 30% by mass or more, more preferably 33% by mass or more, and even more preferably 35% by mass or more. This is because the amount of the active ingredient contained in the negative electrode binder composition can be sufficiently secured. The non-volatile content of the negative electrode binder composition can be adjusted by the content of the aqueous medium (B) contained in the negative electrode binder composition.

The non-volatile content of the negative electrode binder composition is preferably 70% by mass or less, more preferably 65% by mass or less, and even more preferably 60% by mass or less, because this suppresses an increase in the viscosity of the negative electrode binder composition and makes it easier to prepare the negative electrode slurry.

### [Negative electrode binder]

The non-volatile content of the negative electrode binder composition of this embodiment is a component remaining after weighing out 1 g of the negative electrode binder composition, placing it on an aluminum dish with a diameter of 5 cm, placing it in a dryer , and drying it for 1 hour at 1 atmosphere (1013 hPa) and a temperature of 105°C while circulating air in the dryer. The non-volatile content of the negative electrode binder composition is a component that remains without volatilizing even when a step involving heating is performed in the manufacturing method for a non-aqueous secondary battery described later, and is the negative electrode binder contained in the non-aqueous secondary battery.

The content of the polymer (P) in the negative electrode binder is preferably 80% by mass or more, more preferably 90% by mass or more, even more preferably 95% by mass or more, and even more preferably 98% by mass or more, because the effect of including the polymer (P) becomes significant.

### <2. Slurry for non-aqueous secondary battery negative electrode>

Next, the slurry for the negative electrode of a non-aqueous secondary battery of this embodiment (hereinafter, sometimes abbreviated as "slurry for negative electrode") will be described in detail. The slurry for the negative electrode contains the binder composition for the negative electrode of this embodiment and a negative electrode active material. **In** the slurry for the negative electrode, the polymer (P) contained in the binder composition for the negative electrode and the negative electrode active material are preferably dispersed in an aqueous medium. In addition to the binder composition for the negative electrode and the negative electrode active material, the slurry for the negative electrode may contain a thickener, a conductive assistant, the above-mentioned components used in the synthesis of the polymer (P), and the like.

### [Content of polymer (P)]

In the negative electrode slurry, the content of the polymer (P) contained in the negative electrode binder composition is preferably 0.50 parts by mass or more, more preferably 1.0 parts by mass or more, relative to 100 parts by mass of the negative electrode active material. This is to fully express the effect of including the polymer (P). The content of the polymer (P) contained in the negative electrode slurry is preferably 5.0 parts by mass or less, more preferably 4.0 parts by mass or less, and even more preferably 3.0 parts by mass or less, relative to 100 parts by mass of the negative electrode active material. This is because the content of the negative electrode active material contained in the negative electrode slurry can be increased.

### [Negative electrode active material]

The negative electrode active material contained in the negative electrode slurry is a material capable of intercalating/deintercalating ions that serve as charge carriers, such as lithium ions. The ions that serve as charge carriers are preferably alkali metal ions, more preferably lithium ions, sodium ions, or potassium ions, and even more preferably lithium ions.

The negative electrode active material preferably contains at least one of a carbon material, a material containing silicon, and a material containing titanium. Examples of the carbon material used as the negative electrode active material include cokes such as petroleum coke, pitch coke, and coal coke, carbonized organic polymers, and graphites such as artificial graphite and natural graphite. Examples of the silicon-containing material used as the negative electrode active material include silicon simple substance and silicon compounds such as silicon oxide. Examples of the titanium-containing material used as the negative electrode active material include lithium titanate. These materials used as the negative electrode active material may be used alone or in a mixed or composite form.

The negative electrode active material preferably contains at least one of a carbon material and a material containing silicon, and more preferably contains a carbon material. This is because the polymer (P) contained in the negative electrode slurry has a large effect of improving the binding between the negative electrode active materials and between the negative electrode active material and the current collector. In particular, it is preferable that the negative electrode active material contains graphite. This is because the low sodium ion concentration contained in the negative electrode binder composition of this embodiment significantly suppresses the surface deterioration of the negative electrode active material.

### [Thickener]

Examples of thickeners that may be included in the negative electrode slurry include celluloses such as carboxymethyl cellulose (CMC), hydroxyethyl cellulose, and hydroxypropyl cellulose, ammonium salts of celluloses, alkali metal salts of celluloses, polyvinyl alcohol, polyvinylpyrrolidone, etc. The thickener preferably contains at least one of carboxymethyl cellulose, ammonium salts of carboxymethyl cellulose, and alkali metal salts of carboxymethyl cellulose. This is because the electrode active material in the negative electrode slurry becomes more easily dispersed.

The content of the thickener contained in the negative electrode slurry is preferably 0.50 parts by mass or more, more preferably 0.80 parts by mass or more, relative to 100 parts by mass of the electrode active material. This is because the binding between the electrode active materials contained in the negative electrode prepared using the negative electrode slurry and between the electrode active material and the current collector is good. The content of the thickener contained in the negative electrode slurry is preferably 3.0 parts by mass or less, more preferably 2.0 parts by mass or less, and even more preferably 1.5 parts by mass or less, relative to 100 parts by mass of the electrode active material. This is because the coating property of the negative electrode slurry is good.

### [Conductive assistant]

Examples of the conductive assistant that may be included in the negative electrode slurry of this embodiment include carbon black and carbon fiber. Examples of carbon black include furnace black, acetylene black, Denka Black (registered trademark) (manufactured by Denka Co., Ltd.), Ketjen Black (registered trademark) (manufactured by Ketjen Black International Co., Ltd.), and the like. Examples of carbon fiber include carbon nanotubes and carbon nanofibers. A preferred example of carbon nanotubes is VGCF (registered trademark, manufactured by Showa Denko K.K.), which is a vapor grown carbon fiber.

### [Method for producing negative electrode slurry]

As a method for producing the negative electrode slurry of this embodiment, for example, the negative electrode binder composition of this embodiment, the negative electrode active material, the thickener contained as necessary, the conductive assistant contained as necessary, and other components contained as necessary are mixed. The mixing order of each component, which is the raw material of the negative electrode slurry, is not particularly limited and can be determined appropriately. As a method for mixing each component, a method using a mixing device such as a stirring type, a rotating type, or a shaking type can be mentioned.

### <3. Non-aqueous secondary battery negative electrode>

Next, the non-aqueous secondary battery negative electrode of this embodiment will be described in detail. The negative electrode of this embodiment includes a current collector and a negative electrode active material layer formed on the current collector. The negative electrode active material layer contains the non-volatile content of the negative electrode slurry of this embodiment. The shape of the negative electrode of this embodiment is not particularly limited, and may be, for example, a laminate or a wound body.

The area where the negative electrode active material layer is formed on the current collector is not particularly limited, and the negative electrode active material layer may be formed on the entire surface of the current collector, or may be formed only on a part of the surface of the current collector. When the current collector is in the shape of a plate, foil, or the like, the negative electrode active material layer may be formed on both surfaces of the current collector, or may be formed only on one surface.

### [Current collector]

The current collector is preferably a metal sheet having a thickness of 0.001 mm to 0.5 mm. Examples of metals forming the metal sheet include iron, copper, aluminum, nickel, stainless steel, etc. The current collector is preferably a copper foil.

### [Method for producing negative electrode]

The negative electrode of this embodiment can be manufactured, for example, by the method shown below. First, the negative electrode slurry of this embodiment is applied onto a current collector. Then, the negative electrode slurry is dried. This forms a negative electrode active material layer containing the non-volatile content of the negative electrode slurry on the current collector, and forms a negative electrode sheet. Thereafter, if necessary, the negative electrode sheet is cut to an appropriate size. By carrying out the above steps, the negative electrode of this embodiment is obtained.

The method of applying the negative electrode slurry onto the current collector is not particularly limited, but examples thereof include reverse roll method, direct roll method, doctor blade method, knife method, extrusion method, curtain method, gravure method, bar method, dip method, squeeze method, etc. Among these application methods, in consideration of the physical properties such as viscosity of the negative electrode slurry and drying property, it is preferable to use any method selected from the direct roll method, doctor blade method, knife method, and extrusion method . This is because a negative electrode active material layer having a smooth surface and small thickness variation can be obtained.

When the negative electrode slurry is applied to both sides of the current collector, the negative electrode slurry may be applied to each side sequentially or simultaneously. The negative electrode slurry may be applied to the current collector continuously or intermittently.

The amount of the negative electrode slurry to be applied can be appropriately determined depending on the design capacity of the battery and the composition of the negative electrode slurry.

The method for drying the negative electrode slurry applied onto the current collector is not particularly limited, and for example, a method selected from hot air, reduced pressure or vacuum environment, (far) infrared rays, and low temperature air can be used alone or in combination.

The drying temperature and drying time when drying the negative electrode slurry can be appropriately adjusted depending on the non-volatile content concentration in the negative electrode slurry, the amount of the slurry applied to the current collector, etc. The drying temperature is preferably 40°C or more and 350°C or less, and from the viewpoint of productivity, more preferably 60°C or more and 100°C or less. The drying time is preferably 1 minute or more and 30 minutes or less.

The negative electrode sheet in which the negative electrode active material layer is formed on the current collector may be cut to a size and shape appropriate for an electrode. The method for cutting the negative electrode sheet is not particularly limited, and for example, slitting, laser cutting, wire cutting, cutter, Thomson cutting, etc. can be used.

**In** this embodiment, the negative electrode sheet may be pressed as necessary before or after cutting the negative electrode sheet, which allows the negative electrode active material to be more firmly bound to the current collector and reduces the thickness of the negative electrode, thereby enabling the nonaqueous secondary battery to be made smaller.

The negative electrode sheet can be pressed by a general method, and it is particularly preferable to use a die pressing method or a roll pressing method .

When the die pressing method is used, the pressing pressure is not particularly limited, but is preferably 0.5 t/cm² or more and 5 t/cm² or less.

When the roll press method is used, the press load is not particularly limited, but is preferably 0.5 t/cm or more and 8 t/cm or less, because this makes it possible to obtain the above-mentioned effects of pressing while suppressing a decrease in the insertion and desorption capacity of charge carriers such as lithium ions in the negative electrode active material.

### <4. Non-aqueous secondary battery>

Next, a lithium ion secondary battery will be described as a preferred example of the nonaqueous secondary battery according to this embodiment. Note that the configuration of the nonaqueous secondary battery of the present invention is not limited to the example shown below.

The lithium ion secondary battery of this embodiment has a positive electrode, the negative electrode of this embodiment described above, an electrolyte, and known parts such as a separator that are provided as necessary, all of which are housed in an exterior body.

The shape of the lithium ion secondary battery may be any shape, such as a coin type, a button type, a sheet type, a cylindrical type, a rectangular type, or a flat type.

### [Positive electrode]

As the positive electrode, a known positive electrode including a current collector and a positive electrode active material layer formed on the current collector can be used.

As the current collector, the same one that can be used for the negative electrode described above can be used.

The positive electrode active material layer may contain a known binder such as polyvinylidene fluoride and a positive electrode active material.

As the positive electrode active material, a material having a more noble standard electrode potential than the negative electrode active material is used. Specifically, as the positive electrode active material, lithium composite oxides containing nickel, such as Ni-Co-Mn-based lithium composite oxides, Ni-Mn-Al-based lithium composite oxides, and Ni-Co-Al -based lithium composite oxides , lithium cobalt oxide (LiCoO2), spinel-type lithium manganese oxide (LiMn₂O₄), olivine-type lithium iron phosphate, and chalcogen compounds such as TiS₂, MnO₂, MoO₃, and V₂O₅, can be mentioned. These substances used as the positive electrode active material may be used alone or in combination of two or more kinds.

### [Electrolyte]

As the electrolyte, a non-aqueous liquid having ion conductivity is used. Examples of the electrolyte include a solution in which an electrolyte is dissolved in an organic solvent, an ionic liquid, etc., and the former is preferred because it is possible to obtain a lithium ion secondary battery having low manufacturing cost and low internal resistance.

As the electrolyte, an alkali metal salt can be used, and can be appropriately selected according to the type of electrode active material, etc. Examples of the electrolyte include LiClO₄, LiBF₆, LiPF₆, LiCF₃SO₃, LiCF₃CO₂, LiAsF₆, LiSbF₆, LiB₁₀Cl₁₀, LiAlCl₄, LiCl, LiBr, LiB(C₂H₅)₄, CF₃SO₃Li, CH₃SO₃Li, LiCF₃SO₃, LiC₄F₉SO₃, Li(CF₃SO₂)₂N , and aliphatic lithium carboxylate. Other alkali metal salts can also be used as the electrolyte.

The organic solvent for dissolving the electrolyte is not particularly limited, and examples thereof include carbonate compounds such as ethylene carbonate (EC), propylene carbonate (PC), diethyl carbonate (DEC), ethyl methyl carbonate (EMC), dimethyl carbonate (DMC), fluoroethylene carbonate (FEC), and vinylene carbonate (VC), nitrile compounds such as acetonitrile, and carboxylates such as ethyl acetate, propyl acetate, methyl propionate, ethyl propionate, and propyl propionate. These organic solvents may be used alone or in combination of two or more. Among these, it is preferable to use a combination of linear carbonate solvents as the organic solvent.

### [Exterior body]

The exterior body may be made of an aluminum laminate material made of aluminum foil and a resin film, but is not limited to this.

### EXAMPLES

The present invention will be specifically described below with reference to examples and comparative examples. The examples shown below are provided to facilitate understanding of the present invention. The present invention is not limited to these examples.

In the following examples, a negative electrode of a lithium ion secondary battery was prepared as an example of a nonaqueous secondary battery negative electrode of the present invention, and a lithium ion secondary battery was prepared as an example of a nonaqueous secondary battery. The effects of the present invention were confirmed by comparing with a negative electrode of a lithium ion secondary battery and a lithium ion secondary battery according to comparative examples.

Moreover, the water used in the following examples and comparative examples is ion-exchanged water unless otherwise specified.

### <1. Production of binder composition for non-aqueous secondary battery negative electrode>

Monomer emulsions were prepared by mixing monomer (a) shown in Tables 1 to 3 with 200 parts by mass of water as an aqueous medium (b) and an amount of non-polymerizable surfactant (c) shown in Tables 1 to 3 in the mass ratios shown in Tables 1 to 3 and emulsifying the mixture.

Next, an aqueous solution was prepared by dissolving each of the radical polymerization initiators (e) shown in Tables 1 to 3 in the amounts shown in Tables 1 to 3 in 50 parts by mass of water.

**In** a separable flask equipped with a cooling tube, a thermometer, a stirrer, and a dropping funnel, 150 parts by mass of water was placed and heated to 80°C The monomer emulsion and the aqueous solution in which the radical polymerization initiator (e) was dissolved were continuously fed to the separable flask over a period of 3 hours while being stirred at 80°C, respectively, to carry out emulsion polymerization, thereby obtaining emulsions containing dispersed particles containing the polymers of Examples 1 to 4 and Comparative Examples 1 to 3 and an aqueous medium.

The obtained emulsion was cooled to room temperature. Then, 133 parts by mass of water and 25% by mass of aqueous ammonia (17 parts by mass of ammonia, 51 parts by mass of water) in the amounts shown in Tables 1 to 3 were added to the emulsion. In this way, the negative electrode binder compositions of Examples 1 to 4 and Comparative Examples 1 to 3 were produced, which were emulsions in which dispersed particles containing the polymers of Examples 1 to 4 and Comparative Examples 1 to 3 were dispersed in an aqueous medium.

**[Table 1]**

| | Ingredients | | Compound name | Example 1 | | Example 2 | |
|---|---|---|---|---|---|---|---|
| | | | | | *1 | | *1 |
| Amount of ingredients used to prepare binder composition (parts by mass) | Monomer (a) | Monomer (a1) | Styrene | 215 | 55.7% | 212 | 55.0% |
| | | | Methyl methacrylate | | | | |
| | | | 2-Ethylhexyl acrylate | 140 | 36.3% | 138 | 35.8% |
| | | | 2-Hydroxyethyl methacrylate | | | | |
| | | Monomer (a2) | Acrylic acid | | | | |
| | | | Methacrylic acid | 16.3 | 4.2% | 16.3 | 4.2% |
| | | | Itaconic acid | | | | |
| | | Monomer (a3) | Divinylbenzene | 2.5 | 0.65% | 7.5 | 1.94% |
| | | Monomer (a4) | Sodium p-styrenesulfonate | | | | |
| | | | Ethersulfate type ammonium salt | | | | |
| | | | Alkyl ether nonionic surfactant | 11.9 | 3.1% | 11.9 | 3.09% |
| | | | Sodium alkyl arylsulfosuccinate | | | | |
| | | | Polyoxyethylene alkyl ether nitrate ester ammonium salt | | | | |
| | Radical polymerization initiator (e) | | Potassium persulfate | | | | |
| | | | Rongalit SFS | | | | |
| | | | tert-butyl peroxybenzoate | 0.5 | | 0.5 | |
| | | | tert-butyl hydroperoxide | 1.3 | | 1.3 | |
| | | | Ascorbic acid | 0.9 | | 0.9 | |
| | | | Hydrogen peroxide (HPO) | 0.5 | | 0.5 | |
| | Non-polymerizable surfactant (c) | | Polyoxyethylene alkyl ether | 19.9 | | 19.9 | |
| | Basic substances (d) | | Ammonia | 0.3 | | 0.2 | |
| | Aqueous medium (b) | | Water | 591 | | 591 | |
| Evaluation | Binder composition for anode | | Sodium ion concentration (mg/L) | 0.042 | | 0.040 | |
| | | | Concentration of non-volatile component (mass%) | 40 | | 40 | |
| | | | Glass transition temperature (°C) | 25 | | 31 | |
| | | | Particle size (d50) (µm) | 0.27 | | 0.29 | |
| | Battery | | Internal resistance (DCR) (Ω) | 443 | | 431 | |

| | | | | | | | |
|---|---|---|---|---|---|---|---|
| *1 The numbers in the right column of monomer (a) are the content ratio (mass %) of each monomer. | | | | | | | |

**[Table 2]**

| | Ingredients | | Compound name | Example 3 | | Example 4 | |
|---|---|---|---|---|---|---|---|
| | | | | | *1 | | *1 |
| Amount of ingredients used to prepare binder composition (parts by mass) | Monomer (a) | Monomer (a1) | Styrene | 215 | 55.7% | 212 | 54.8% |
| | | | Methyl methacrylate | | | | |
| | | | 2-Ethylhexyl acrylate | 143 | 37.0% | 140 | 36.2% |
| | | | 2-Hydroxyethyl methacrylate | | | | |
| | | Monomer (a2) | Acrylic acid | | | 10 | 2.6% |
| | | | Methacrylic acid | 16.3 | 4.2% | | |
| | | | Itaconic acid | | | 8.0 | 2.1% |
| | | Monomer (a3) | Divinylbenzene | | | 2.5 | 0.65% |
| | | Monomer (a4) | Sodium p-styrenesulfonate | | | | |
| | | | Ethersulfate type ammonium salt | | | | |
| | | | Alkyl ether nonionic surfactant | 11.9 | 3.1% | 9.1 | 2.4% |
| | | | Sodium alkyl arylsulfosuccinate | | | | |
| | | | Polyoxyethylene alkyl ether nitrate ester ammonium salt | | | 5.0 | 1.3% |
| | Radical polymerization initiator (e) | | Potassium persulfate | | | | |
| | | | Rongalit SFS | | | | |
| | | | tert-butyl peroxybenzoate | 0.5 | | 0.6 | |
| | | | tert-butyl hydroperoxide | 1.3 | | 1.8 | |
| | | | Ascorbic acid | 0.9 | | 1.8 | |
| | | | Hydrogen peroxide (HPO) | 0.5 | | 0.5 | |
| | Non-polymerizable surfactant (c) | | Polyoxyethylene alkyl ether | 19.9 | | 17.7 | |
| | Basic substances (d) | | Ammonia | 0.2 | | 4.3 | |
| | Aqueous medium (b) | | Water | 591 | | 596 | |
| Evaluation | Binder composition for anode | | Sodium ion concentration (mg/L) | 0.048 | | 0.047 | |
| | | | Concentration of non-volatile component (mass%) | 40 | | 40 | |
| | | | Glass transition temperature (°C) | 22 | | 26 | |
| | | | Particle size (d50) (µm) | 0.30 | | 0.32 | |
| | Battery | | Internal resistance (DCR) (Ω) | 461 | | 449 | |

| | | | | | | | |
|---|---|---|---|---|---|---|---|
| *1 The numbers in the right column of monomer (a) are the content ratio (mass %) of each monomer. | | | | | | | |

**[Table 3]**

| | Ingredients | | Compound name | Comparative Example 1 | | Comparative Example 2 | | Comparative Example 3 | |
|---|---|---|---|---|---|---|---|---|---|
| | | | | | * 1 | | * 1 | | *1 |
| Amount of ingredients used to prepare binder composition (parts by mass) | Monomer (a) | Monomer (a1) | Styrene | 192 | 48.9% | 212 | 56.4% | 191 | 48.9% |
| | | | Methyl methacrylate | 0.18 | 0.05% | | | 0.18 | 0.05% |
| | | | 2-Ethylhexyl acrylate | 169 | 43.1% | 140 | 37.2% | 170 | 43.5% |
| | | | 2-Hydroxyethyl methacrylate | 7.5 | 1.9% | | | 7.6 | 1.9% |
| | | Monomer (a2) | Acrylic acid | 12 | 3.1% | 10 | 2.7% | 9 | 2.3% |
| | | | Methacrylic acid | | | | | | |
| | | | Itaconic acid | 7.5 | 1.9% | 8.0 | 2.1% | 7.6 | 1.9% |
| | | Monomer (a3) | Divinylbenzene | 0.3 | 0.08% | 2.5 | 0.7% | | |
| | | Monomer (a4) | Sodium p-styrenesulfonate | 2.3 | 0.59% | 2.5 | 0.7% | 2.3 | 0.59% |
| | | | Ethersulfate type ammonium salt | 0.8 | 0.19% | | | 0.8 | 0% |
| | | | Alkyl ether nonionic surfactant | | | | | | |
| | | | Sodium alkyl arylsulfosuccinate | | | | | 2.3 | 0.6% |
| | | | Polyoxyethylene alkyl ether nitrate ester ammonium salt | 0.9 | 0.2% | 0.9 | 0.2% | | |
| | Radical polymerization initiator (e) | | Potassium persulfate | 1.1 | | 1.1 | | 1.7 | |
| | | | Rongalit SFS | 2.3 | | 2.3 | | 0.8 | |
| | | | tert-butyl peroxybenzoate | 0.6 | | 0.6 | | 0.6 | |
| | | | tert-butyl hydroperoxide | 1.2 | | 1.2 | | 1.2 | |
| | | | Ascorbic acid | 0.4 | | 0.4 | | 0.4 | |
| | | | Hydrogen peroxide (HPO) | | | | | | |
| | Non-polymerizable surfactant (c) | | Polyoxyethylene alkyl ether | | | | | 0.8 | |
| | Basic substances (d) | | Ammonia | 1.0 | | 0.3 | | 3.5 | |
| | Aqueous medium (b) | | Water | 599 | | 584 | | 591 | |
| Evaluation | Binder composition for anode | | Sodium ion concentration (mg/L) | 6.05 | | 6.30 | | 5.01 | |
| | | | Concentration of non-volatile component (mass%) | 40 | | 40 | | 40 | |
| | | | Glass transition temperature (°C) | 13 | | 26 | | 15 | |
| | | | Particle size (d50) (µm) | 0.20 | | 0.32 | | 0.27 | |
| | Battery | | Internal resistance (DCR) (Ω) | 524 | | 546 | | 510 | |

| | | | | | | | | | |
|---|---|---|---|---|---|---|---|---|---|
| *1 The numbers in the right column of monomer (a) are the content ratio (mass %) of each monomer. | | | | | | | | | |

The amount of water as the aqueous medium (b) shown in Tables 1 to 3 is the total amount (parts by mass) of water contained in the negative electrode binder composition.

The amount of ammonia as the basic substance (d) shown in Tables 1 to 3 is the amount of ammonia (parts by mass) contained in the ammonia water.

The monomer (a4) shown in Tables 1 to 3 is as follows.

The ether sulfate type ammonium salt (compound name: α- [2-(allyloxy)-1-(alkyloxymethyl)ethyl] -ω-polyoxyethylene sulfate ester ammonium salt, product name: ADEKA REASOAP SR10, manufactured by ADEKA Corporation) is a polymerizable surfactant consisting of the compound represented by the above chemical formula (2).

An alkyl ether nonionic surfactant (compound name: α- [2-(allyloxy)-(alkyloxymethyl)ethyl] -ω-hydroxypolyoxyethylene, product name: ADEKA REASOAP ER20, manufactured by ADEKA Corporation) is a polymerizable surfactant made of the compound represented by the above chemical formula (1).

Sodium alkylarylsulfosuccinate (product name: Eleminol JS-20, manufactured by Sanyo Chemical Industries, Ltd.) is a sodium-containing polymerizable surfactant made of the compound represented by the above chemical formula (4).

Polyoxyethylene alkyl ether sulfate ammonium salt (Aqualon KH-10, manufactured by Daiichi Kogyo Seiyaku Co., Ltd.) is a polymerizable surfactant made of the compound represented by the above chemical formula (2).

Rongalite SFS in the polymerization initiator (e) is a trade name of Rongalite manufactured by Sumitomo Seika Chemicals Co., Ltd., and is a compound containing sodium.

The polyoxyethylene alkyl ether in the non-polymerizable surfactant (c) is Emulgen 1150S-60 manufactured by Kao Corporation.

### <2. Evaluation of negative electrode binder composition>

The particle size (d50) of the dispersed particles containing the polymer and the glass transition temperature (Tg) of the polymer contained in the negative electrode binder compositions of Examples 1 to 4 and Comparative Examples 1 to 3 were measured by the methods described below. The results are shown in Tables 1 to 3.

In addition, the non-volatile content and sodium ion concentration were measured by the methods described below for each of the negative electrode binder compositions of Examples 1 to 4 and Comparative Examples 1 to 3. The results are shown in Tables 1 to 3.

### [Particle diameter (d50) of dispersed particles containing polymer contained in negative electrode binder composition]

The negative electrode binder composition was measured by dynamic light scattering (DLS) at room temperature using a NANOTORAC WAVE II (manufactured by Microtrack Bell Co., Ltd.) to measure the particle diameter (d50) as the volume-based median diameter of dispersed particles containing a polymer.

### [Glass transition temperature (Tg)]

The negative electrode binder composition was applied onto a release PET (polyethylene terephthalate) film and dried at 50°C for 5 hours to obtain a polymer film having a thickness of 2 mm.

A square test piece measuring 2 mm in length and 2 mm in width was cut out from the obtained film. The test piece was sealed in an aluminum pan, and a differential scanning calorimeter (EXSTAR DSC/SS7020 manufactured by Hitachi High-Tech Science Corporation) was used to perform differential scanning calorimetry (DSC) measurement of the test piece at a heating rate of 10°C/min under a nitrogen gas atmosphere. The temperature range of the DSC measurement was -40°C to 200°C. The peak top temperature of the DDSC chart obtained as the temperature derivative of the DSC was then measured, and this temperature was taken as the glass transition temperature Tg (°C) of the polymer.

### [Non-volatile content]

1 g of the negative electrode binder composition was weighed, placed on an aluminum dish with a diameter of 5 cm, and placed in a dryer. While circulating air in the dryer, the composition was dried at 1 atmosphere (1013 hPa) and a temperature of 105°C for 1 hour, and the mass of the remaining components was measured. The mass ratio (mass%) of the above components remaining after drying relative to the mass (1 g) of the negative electrode binder composition before drying was calculated, and this was taken as the non-volatile content concentration (mass%).

### [Sodium ion concentration in negative electrode binder composition]

Using the measurement results of the nonvolatile content of the negative electrode binder composition, the negative electrode binder composition was diluted with water to prepare a test liquid with a nonvolatile content of 0.4 mass %, and the sodium ion concentration was measured.

Hereinafter, a specific description will be given of a case where a test liquid is prepared using a negative electrode binder composition having a nonvolatile content concentration of 40 mass % and the sodium concentration is measured.

First, 0.2 g of a negative electrode binder composition having a nonvolatile content of 40% by mass was precisely weighed and placed in a container, and 15 g of distilled water was added thereto, followed by shaking and stirring to prepare a first solution.

Next, 0.2 ml of nitric acid (density 1.42 g/cm³) and 0.2 ml of the internal standard solution were added to the container in which the first solution was prepared, and the mixture was shaken and stirred to prepare a second solution. The internal standard solution used contained yttrium-containing water, lithium-containing water, and distilled water in the following ratios (volume ratios): Y-containing water (yttrium, 1000 ppm)/Li-containing water (lithium, 1000 ppm)/distilled water = 25/100/375

Thereafter, distilled water was further added to the container in which the second solution was prepared so that the non-volatile content concentration was 0.4% by mass, and the mixture was shaken and stirred to prepare 20 g of a third solution. The third solution was then placed in a syringe and filtered using a filter with a mesh size of 5 µm, and the obtained filtrate was used as the test solution.

The sodium ion concentration (content (mg/L)) of the test solution thus prepared was measured at 23°C using an inductively coupled plasma emission spectrometer (Shimadzu Corporation, ICPE-9000).

### <3. Production of non-aqueous secondary battery>

Negative electrodes were produced by the methods described below using the negative electrode binder compositions of Examples 1 to 4 and Comparative Examples 1 to 3, respectively, and lithium ion secondary batteries, which are nonaqueous secondary batteries, of Examples 1 to 4 and Comparative Examples 1 to 3 were produced using the negative electrodes.

### [Preparation of Positive Electrode]

94 parts by mass of LiNi_{0.6}Mn_{0.2}Co_{0.2}O₂ as a positive electrode active material , 3 parts by mass of acetylene black as a conductive assistant, and 3 parts by mass of polyvinylidene fluoride as a binder. 50 parts by mass of N-methylpyrrolidone was added to the mixture and further mixed to obtain a positive electrode slurry.

An aluminum foil having a thickness of 15 µm was prepared as a positive electrode current collector. The positive electrode slurry was applied to both sides of the positive electrode current collector by a direct roll method. The amount of the positive electrode slurry applied to the positive electrode current collector was adjusted so that the thickness after the roll press treatment described below was 125 µm per side.

The positive electrode slurry applied to the positive electrode current collector was dried at 120°C for 5 minutes, and pressed by a roll press method using a roll press (manufactured by Thank Metals, press load 5 t/cm, roll width 7 cm) to obtain a positive electrode sheet having a positive electrode active material layer on both sides of the positive electrode current collector. The obtained positive electrode sheet was cut into a rectangle of 50 mm in length and 40 mm in width, and a conductive tab was attached to make a positive electrode.

### [Preparation of negative electrode]

96.9 parts by mass of artificial graphite (G49, manufactured by Jiangxi Zishen Technology Co., Ltd.) as a negative electrode active material, 3.6 parts by mass (1.4 parts by mass of non-volatile matter) of any of the negative electrode binder compositions produced in Examples 1 to 4 and Comparative Examples 1 to 3, and 60 parts by mass of a 2% by mass aqueous solution of CMC (carboxymethylcellulose-sodium salt, manufactured by Nippon Paper Chemicals Co., Ltd., Sunrose (registered trademark) MAC500LC) were mixed, and 16 parts by mass of water was further added and mixed using a planetary centrifugal mixer (ARE-310, manufactured by Thinky Corporation) to obtain a negative electrode slurry.

A copper foil having a thickness of 10 µm was prepared as a negative electrode current collector. The negative electrode slurry was applied to both sides of the negative electrode current collector by a direct roll method. The amount of the negative electrode slurry applied to the negative electrode current collector was adjusted so that the thickness of the negative electrode active material layer after the roll press treatment described below was 170 µm per side.

The negative electrode slurry applied to the negative electrode current collector was dried at 90°C for 10 minutes, and pressed by a roll press method using a roll press (manufactured by Thank Metals, press load 8t/cm, roll width 7cm). This resulted in a negative electrode sheet having a negative electrode active material layer on both sides of the negative electrode current collector. The obtained negative electrode sheet was cut into a rectangle of 52 mm in length and 42 mm in width, and a conductive tab was attached to form a negative electrode.

### [Preparation of non-aqueous secondary battery]

A separator (made of polyethylene, thickness 25 µm) made of a polyolefin-based porous film was interposed between the positive electrode and the negative electrode, and the positive electrode active material layer and the negative electrode active material layer were laminated so as to face each other, and the laminate was housed in an exterior body (battery pack) made of an aluminum laminate material. Then, an electrolyte was poured into the exterior body, vacuum impregnation was performed, and the battery was packed with a vacuum heat sealer to obtain a lithium ion secondary battery.

The electrolyte used was a mixture of 99 parts by mass of a solution in which LiPF6 was dissolved at a concentration of 1.0 mol/L in a mixed solvent containing ethylene carbonate (EC), ethyl methyl carbonate (EMC), and diethyl carbonate (DEC) in a volume ratio of EC:EMC:DEC = 30:50:20 , and 1 part by mass of vinylene carbonate (VC).

### <4. Evaluation of non-aqueous secondary batteries>

The internal resistance of each of the lithium ion secondary batteries of Examples 1 to 4 and Comparative Examples 1 to 3 was evaluated by the method described below. The results are shown in Tables 1 to 3.

### [Internal resistance (DCR)]

The internal resistance (DCR (mΩ)) of the lithium ion secondary battery was measured under the condition of 25°C by the following procedure. That is, the battery was charged at a constant current of 0.2 C from the rest potential until the voltage reached 3.6 V, and the state of charge was set to 50% of the initial capacity (SOC50%). Then, the battery was discharged for 60 seconds at current values of 0.2 C, 0.5 C, 1 C, and 2 C. The internal resistance DCR (mΩ) at SOC50% was determined from the relationship between these four current values (values for 1 second) and voltage.

### <5. Evaluation Results>

As shown in Tables 1 to 3, the lithium ion secondary batteries of Examples 1 to 4 all had lower internal resistances than the lithium ion secondary batteries of Comparative Examples 1 to 3. This is presumably because the sodium ion concentrations in the negative electrode binder compositions used in forming the negative electrodes of the lithium ion secondary batteries of Examples 1 to 4 were low.

In particular, the lithium ion secondary battery of Example 2 had an internal resistance of 431 mΩ, which was extremely low compared to the lithium ion secondary batteries of Comparative Examples 1 to 3. This is presumably because, as shown in Table 1, the sodium ion concentration in the negative electrode binder composition contained in the negative electrode of the lithium ion secondary battery of Example 2 was low.

The content of the negative electrode binder composition in the negative electrodes of Examples 1 to 4 is small (1.4 parts by mass of nonvolatile matter). Nevertheless, the internal resistance of the lithium ion secondary batteries using the negative electrode binder compositions of Examples 1 to 4 is significantly different from that of Comparative Examples 1 to 3. This shows that the effect obtained by using the negative electrode binder compositions of Examples 1 to 4 is very remarkable.

### INDUSTRIAL APPLICABILITY

It is possible to provide a binder composition for a non-aqueous secondary battery negative electrode capable of forming a non-aqueous secondary battery negative electrode that results in a non-aqueous secondary battery with low internal resistance, and a slurry for a non-aqueous secondary battery negative electrode containing the same.

The present invention provides a non-aqueous secondary battery negative electrode that contains the non-volatile components of the slurry for a non-aqueous secondary battery negative electrode and that provides a non-aqueous secondary battery with low internal resistance, and a non-aqueous secondary battery including the same.

## Claims

1. A binder composition for a non-aqueous secondary battery negative electrode, comprising: a polymer; and an aqueous medium, wherein
the polymer has a first structural unit derived from a monomer (a1),
the monomer (a1) is a nonionic compound having only one ethylenically unsaturated bond, and
the binder composition satisfies the following condition (1): a concentration of sodium ions detected using an inductively coupled plasma optical emission analyzer is 3.0 mg/L or less in a test liquid obtained by diluting the binder composition with water and having a non-volatile concentration of 0.4 mass%.

2. The binder composition for a non-aqueous secondary battery negative electrode according to claim 1, wherein the polymer further comprises a second structural unit derived from a monomer (a2), and the monomer (a2) is a compound having a carboxy group and an ethylenically unsaturated bond.

3. The binder composition for a non-aqueous secondary battery negative electrode according to claim 1, wherein the polymer further comprises a third structural unit derived from a monomer (a3), and the monomer (a3) is a compound having a plurality of independent ethylenically unsaturated bonds.

4. The binder composition for a non-aqueous secondary battery negative electrode according to claim 1, wherein the polymer further comprises a fourth structural unit derived from a monomer (a4), and the monomer (a4) contains a polymerizable surfactant.

5. The binder composition for a non-aqueous secondary battery negative electrode according to any one of claims 1 to 4, wherein the binder composition satisfies the following condition (2): a concentration of sodium ions detected using an inductively coupled plasma optical emission spectrometer is 0.01 mg/L or more in a test liquid obtained by diluting the binder composition with water and having a non-volatile matter concentration of 0.4 mass%.

6. The binder composition for a non-aqueous secondary battery negative electrode according to claim 2, wherein a content of the second structural unit in all structural units is 0.10% by mass or more and 20% by mass or less.

7. The binder composition for a non-aqueous secondary battery negative electrode according to claim 3, wherein a content of the third structural unit in all structural units is 0.010% by mass or more and 15% by mass or less.

8. The binder composition for a non-aqueous secondary battery negative electrode according to claim 4, wherein a content of the fourth structural unit in all structural units is 0.10% by mass or more and 6.0% by mass or less.

9. The binder composition for a non-aqueous secondary battery negative electrode according to claim 1, containing dispersed particles containing the polymer.

10. The binder composition for a non-aqueous secondary battery negative electrode according to claim 9, wherein an average particle diameter d50 of the dispersed particles is 0.18 µm or more and 1.0 µm or less.

11. A slurry for a non-aqueous secondary battery negative electrode containing the binder composition for a non-aqueous secondary battery negative electrode according to claim 1 and a negative electrode active material.

12. The slurry for a non-aqueous secondary battery negative electrode according to claim 11, wherein the negative electrode active material contains graphite.

13. A non-aqueous secondary battery negative electrode containing the non-volatile content of the slurry for a non-aqueous secondary battery negative electrode according to claim 11 or claim 12.

14. A non-aqueous secondary battery comprising the non-aqueous secondary battery negative electrode according to claim 13.
